# EUROPEAN PATENT APPLICATION

(11) **EP 1 975 783 A1**
(43) Date of publication of application: **01.10.2008**
(21) Application number: 07006769.9
(22) Date of filing: 31.03.2007
(51) Int. Cl.: G06F 9/44

(54) **Method and system for adapting a user interface of a device**

(71) Applicant: SONY DEUTSCHLAND GMBH, 10785 Berlin (DE)
(72) Inventor: Feduszczak, Tomasz, 70327 Stuttgart (DE); Zimmer, Taufan, 70327 Stuttgart (DE); Kemp, Thomas, 70327 Stuttgart (DE); Hagg, Wilhelm, 70327 Stuttgart (DE); Eggink, Jana, 70327 Stuttgart (DE); Giron, Franck, 70327 Stuttgart (DE)
(74) Representative: Müller - Hoffmann & Partner

(57) **Abstract**

Method for adapting a user interface of a device, comprising detecting user characteristic data of an active user, wherein said user characteristic data is descriptive of a capability of said active user to handle said user interface, determining an adapted user interface based on said user characteristic data; and approving said adapted user interface based on user feedback of at least one user with similar user characteristic data.

## Description

The invention relates to a method for adapting a user interface of a device and to a corresponding system.

### BACKGROUND

A typical user interface does not propose a wide range of adaptive possibility. Among the main existing solutions, the user can modify the user interface in several ways, as an example, the user can conclude or exclude menus, sub-menus or a toolbar by modifying user interface settings. There are also menus that can switch between short and complete menu according to how long the user stays within a button. Other menus display automatically items if the user has already accessed them.

It is an object of the invention to provide a better method and system for adapting a user interface of a device.

The object is solved by a method and a system according to claims 1 and 17, respectively.

Further embodiments are defined in the dependent claims.

Further details of the invention will become apparent from a consideration of the drawings and ensuing description.

### BRIEF DESCRIPTION OF THE DRAWINGS

- **Fig. 1**: shows main step of one embodiment of the invention,
- **Fig. 2**: shows a block diagram of a further embodiment of the invention,
- **Fig. 3**: shows a block diagram of another embodiment of the invention,
- **Fig. 4**: shows a further embodiment of the invention,
- **Fig. 5**: shows a structure of an embodiment of the invention,
- **Fig. 6**: shows a layer structure of an embodiment of the invention,
- **Fig. 7**: shows an overview over different user interface agents according to a further embodiment of the invention,
- **Fig. 8**: shows a further embodiment of the invention, and
- **Fig. 9**: shows an embodiment of a data base.

### DETAILED DESCRIPTION

In the following embodiments of the invention are described. It is important to note, that all described embodiments in the following may be combined in any way, i. e. there is no limitation that certain described embodiments may not be combined with others.

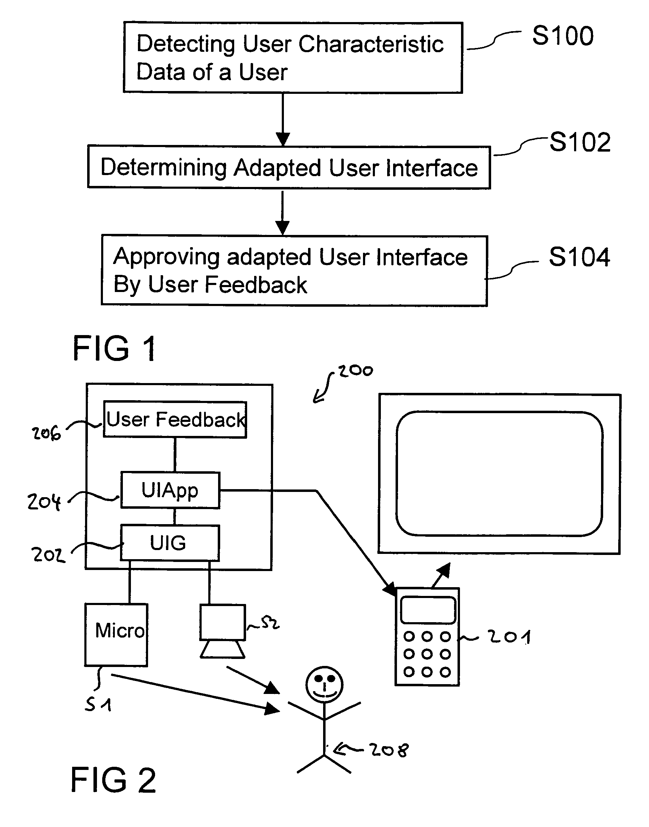

In Fig. 1 in step S 100 user characteristic data of an active user is detected. The user characteristic data might be an emotional state of the user, a user identification data, like e.g. some personal identification characteristic or data about the user, who is actually handling the user interface. The user characteristic data describes the capability of the user to handle the user interface. Such capability might be influenced by an emotional state of the user, by a complexity of the user interface, by physical capabilities etc. The user characteristic data may be detected from an implicit behaviour of said user, i.e. the active user might not give direct instructions to adapt the user interface.

In step S102 an adapted user interface is determined. Such adaptation should result in a better usability of the adapted user interface compared with the original user interface, which has been used so far.

In step S104 the adapted user interface is approved by user feedback of at least one user with similar user characteristic data. Such approval might be given either by the active user itself or by member of a user group who already have approved a correspondingly amended user interface.

With this approach in any case an adapted user interface is not used without further approving, so that no adapted user interface is further used, which adaptation would not suit the user's need.

In a further embodiment the user feedback is given by said active user, so that a direct feedback is provided to an adaptation.

In a further embodiment the active user is assigned to a user group based on said user characteristic data, wherein said user group comprises users with said similar user characteristic data. The adapted user interface is selected based on an already approved user interface, which has been approved by at least one member of said user group. With this embodiment user interfaces which has been used already by certain user groups, e. g. handicapped people, older people, children, beginners, professionals might be used, when corresponding user characteristics of the active user have been detected.

According to a further embodiment the adaptation of the user interface may be improved by detecting a plurality of different user characteristic data of said active user, which could be used e.g. for a finer user group assignment or for a better user profile determination of the active user.

According to a further embodiment said user characteristic data comprises an environment of the active user, which might be useful, e.g. if the environment, which might be detected by a video camera, provides information about the user's capabilities. If the active user for example is trying to reach a train, which is about to leave the train station, the user interface of a ticket selling apparatus could be adapted to not show additional advertisement.

According to a further embodiment said user characteristic data comprises user identification data for individually adapting the user interface to said active user.

In a further embodiment the adapted user interface is stored, if said user characteristic data is user identification data. The next time the same user uses the device, the same user identification data may be detected, the already adapted user interface can be used and possibly further adapted to newly detected user characteristic data. Thus an improvement of the user's capabilities might be acknowledged and the user interface correspondingly adapted, e.g. the user interface might display more functions.

In a further embodiment said user characteristic data comprises images of said active user which images, e.g. the face of the active user could be used to identify the active user.

According to a further embodiment said user characteristic data comprises an audio signal, e.g. for detecting an emotional state of the active user and using such a detected emotional state (e. g. nervousness) to determine a corresponding adapted user interface.

According to a further embodiment, said user characteristic data comprises statistical data, which are derived, while said active user handles said user interface. Such statistical data might comprise for example the motion of an input device like a mouse or about an uncertainty to chose the right control element and might therefore be helpful in order to determine an adapted user interface. According to a further embodiment control elements of said user interface are adapted in order to facilitate the use of such control elements by said active user, e.g. since the user is not able to find smaller control elements on said user interface.

According to a further embodiment a number of control elements of said user interface is adapted, e. g. since an active user, e. g. a child, is not allowed to use other control elements.

According to a further embodiment a functionality of said user interface is adapted, which could be used, e. g. for restricting the functionality in case a beginner is said active user or for restricting the use for users who are either not allowed to use other functionality, e.g. due to security reasons or to child's care reasons or who are not enabled to use other functionalities, e.g because the user is a beginner and does not know how to handle a sophisticated sub-menu in a computer program.

According to a further embodiment the design of said user interface is adapted, so that, for instance, a certain remote control might be more easily found after the adaptation of said design or in order to further help this user to find the correct control elements.

In Fig. 2 a system 200 for adapting a user interface of a device 202, e. g. a remote control, is depicted, which comprise at least one sensor S1 configured to detect user characteristic data, which user characteristic data is descriptive of a capability of the active user to handle said user interface. Said system 200 further comprises a user interface generator 202, configured to adapt said user interface to said user characteristic data and additionally a user interface approval unit 204 is provided, which is configured to approve said adapted user interface by user feedback 206 of at least one active user 208 with several characteristic data.

According to a further embodiment an input mechanism is provided, configured to input user feedback of said active user 208 to said adapted user interface.

According to a further embodiment said user interface approval unit 204 is configured to assign said active user 208 to a user group based on said user characteristic data and is further configured to adapt said user interface based on recommendations of members of said user group.

In a further embodiment said system 200 comprises a data base configured to store a plurality of user interfaces together with at least one user group with members, who recommended said user interface. Said user interface approval unit 204 is configured to assign said active user 208 to at least one of said at least one user groups based on said user characteristic data.

According to a further embodiment at least one user interface agent is provided, said user interface agent being configured to collect user characteristic data and to propose modifications of said user interface to said user interface generator 202.

According to a further embodiment a plurality of user interface agents is provided, each user interface agent of said plurality being configured to collect different user characteristics or to propose different modifications or to derive said modifications differently than any other user interface agent of said plurality of user interface agents.

According to a further embodiment a user interface agent layer is arranged between said user interface and said active user, wherein said plurality of user interface agents is organized in said user interface agent layer.

In a further embodiment said user interface agents are configured to communicate with other user interface agents, which might be used to interchange modifications or information about the active user derived from said user interface agent which other user interface agents.

According to a further embodiment said plurality of user interface agents comprises a collaborative agent configured to evaluate recommendations of the user group in order to be derive proposals for said modifications.

According to a further embodiment said plurality of user interface agents comprise a feedback agent configured to evaluate feedback of said active user 208.

In a further embodiment said plurality of user interface agents comprise an audio agent configured to evaluate audio data from said active user.

According to a further embodiment said plurality of user interface agents comprise a video agent, configured to evaluate video data from said active user.

In a further embodiment said plurality of user interface agents comprise a biological agent configured to evaluate biological data from said active user.

In a further embodiment said plurality of user interface agents comprise a statistical agent configured to evaluate statistical data derived from handling of said user interface by said active user.

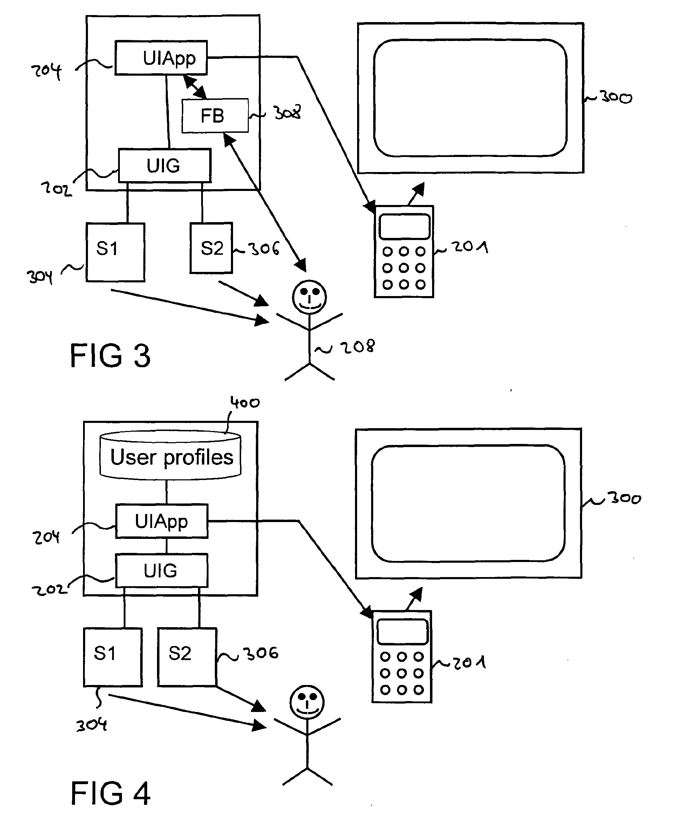

In Fig. 3 a further embodiment is depicted. An active user 206 uses a user interface 201 on a remote control in order to control a device e. g. a television set 200. Two sensors S1, S2, e.g. a microphone 304 and a video camera 306 detect user characteristic data, e. g. that the active user 208 is a child. The user characteristic data is used by the user interface generator 202 to adapt the user interface 201. The user interface approval unit 204 asks the active user 208 for explicit feedback to propose modifications for the adapted user interface. The user interface and the active user 208 gives explicit feedback 308 to the user interface approval unit 304, e. g. also via the remote control 201.

In the embodiment depicted in Fig, 4 the active user 208 is using the remote control 201 to control the television set 300. The sensors 304 and 306 determine characteristic data of the active user 208 and the user interface generator 202 derives an adapted user interface. Said adapted user interface is approved by said user interface approval unit 204 while checking in a data base 400 whether such adapted user interfaces correspond to a user profile that has been assigned to said active user 208 by evaluating said user characteristic data. Within the database 400 there are stored user profiles, I. e. user interfaces, which are already recommended by members of said user group.

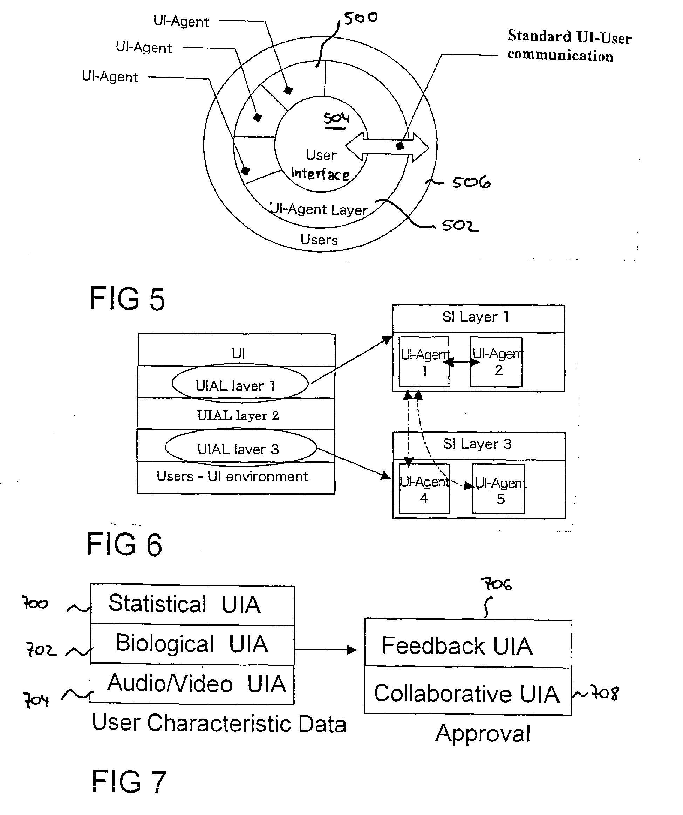

In Fig. 5 a schematic diagram is showing user interface agents (UIA) 500 in a user interface agent layer (UIAL) 502, which is arranged between the user interface (UI) 504 and a user 506. The user interface agent layer 502 is a hardware and/or software structure that allows the user interface to adapt itself automatically with respect to the capability of the active user 208 to use the user interface 504. Levels of competences like for example "beginner", "quite confident" or "expert" can model these capabilities.

Apart from this standard user interface/user communication the user interface agent layer collects information about the user and the environment that is defined with different user profiles and the current user interface settings. The user interface can then recommend some modification according to the information provided by the user interface agent layer. This is achieved thanks to one or several modules, so-called user interface agents that are able to collect intelligently the needed information. There can be several categories of user interface agents. The user interface agents can have access to a user's capability or level of expertise to use the user interface directly or indirectly from the user. The direct way is relative to user's wishes and the indirect way corresponds to some clues that are evaluated from the user's behaviour.

The user interface agent layer is a layer that brings intelligently user's information to the user interface. The structure of the user interface can include several user interface agent layers that are connected to each other so as together organize information acquisition. One user interface agent layer is composed of several user interface agents that are all specific to one or a group of tasks. The main objective of the user interface agent is to transfer and/or process information of the user, and/or the user interface environment defined by the user profiles and the current user interface settings. The user interface agents from the same user interface agent layer and/or from different user interface agent layers can be connected to facilitate and improve information quality. In Fig. 6 such an environment with a first user interface agent layer UIAL layer 1 a second user interface agent layer UIAL layer 2 and a third user interface agent layer UIAL layer 3 between a range between the user interface UI and a user/user interface environment is depicted. Schematically it is shown that two user interface agents UI-Agent 1 and UI-Agent 2 in the first user interface agent layer UIAL layer 1 can communicate as well as the user interface agent UI-Agent 1 of the first user interface agent layer UIAL layer with a user interface agent UI-Agent 4 in a third user interface agent layer UIAL layer 3 and with a user interface agent UI-Agent 5 in said third user interface agent layer UIAL layer 3.

There are several ways to determine the competence of the user. The first way is to get direct feedbacks from the user. Such user's recommendation might be helpful but not really comfortable from usability point of view, since the user has to change settings somewhere in the menu. An intuitive adaptation regarding the user's competence is feasible with user interface agents.

Statistical user interface agents allow evaluating the user's level thanks to statistics computed from the user behaviour, actions and activity. For example, mouse motions may translate also the behaviour of the user. If the motion is quite low, inappropriate or hesitating it can help to determine a "beginner-like" level of the user. Some statistics, such as for example the time, the frequency, the nth-order moment can be very useful to translate user's behaviour into clue-information. Another example in statistical information from the user's activities that can be used to synthesize user interface tuned to the user profile. The statistics are based on frequency. This statistics is not necessarily applied with an infinite history, but can be updated and/or reset periodically for example.

The user actions are a relevant clue that can be interesting to determine the user's level or user's capability. If actions are not coherent together it might point out a "beginner-like" level. The coherence of an action sequence can be evaluated with stochastic structures such as Hidden-Markov models (HMM). Another possibility is to set a grammar tree such as the Chomsky-like tree dedicated to recognize coherent action sequences.

All these user interface agents are useful to detect automatically the user's level or capability. Thanks to these clues, the user interface can introduce modifications that are coherent with the user's profile. These user interface agents can also evaluate the emotion of the user, for example the user interface can apply some modifications according to the user's nervous state estimated from one and/or more user interface agents.

Feedback user interface agents get information directly from the active users. For example, if the user interface modifies something, the user can provide some feedback (e. g. "good", "not good", "not enough complex", "too complex", "need information about updates"). These feedbacks are not necessarily binary-like answers but can also provide a level of significance (e. g. a potential made-like interface that can be adjusted by the user). Such feedback introduces coherent and reliable communication within the user and the user interface thanks to the feedback user interface agent.

Collaborative user interface agents give the opportunity to the user interface to share information through different user profiles so as to improve the quality of the user interface services and/or recommendations. If one item of the user interface is often used or recently discovered by one user, this might be noticed by a user interface agent that can apply and/or recommend the user interface to another user. Such a collaborative user interface agent processing is interesting to propose new user interface settings to a user that had not the opportunity to find some items or to be recommended about new ones. The collaborative user interface agent has to get information about user's profile from a source that can be located for example in the user interface agent itself or in the user interface structure.

Audio/video based user interface agents provide information that can be used to interpret the user's confidence state. For example, the speech and/or sounds from the user can be useful to determine the emotion of the user as a clue for the competence of the user. The video can be used for facial emotion analysis. Visual emotion analysis can be achieved also with eye tracking. This user interface agents can be commonly classified with the intuitive user interface agents.

Biological user interface agents can provide biological information such as the user's pulse, body temperature or stress level for that can be used as clue to detect the competence level of the user.

User interface agents can acquire user characteristic data without keeping the attention of the user, as a background task by using clues about the user's capabilities (e. g. mouse behaviour analysis, audio/video analysis).

In Fig. 7 it is depicted that the statistical user interface agent 700, the biological user interface agent 702, and the audio/video user interface agent 704 might be considered to determine user characteristic data, whereas the feedback user interface agent 706 and the collaborative user interface agent 708 might be considered to approve the use of an adaptive user interface.

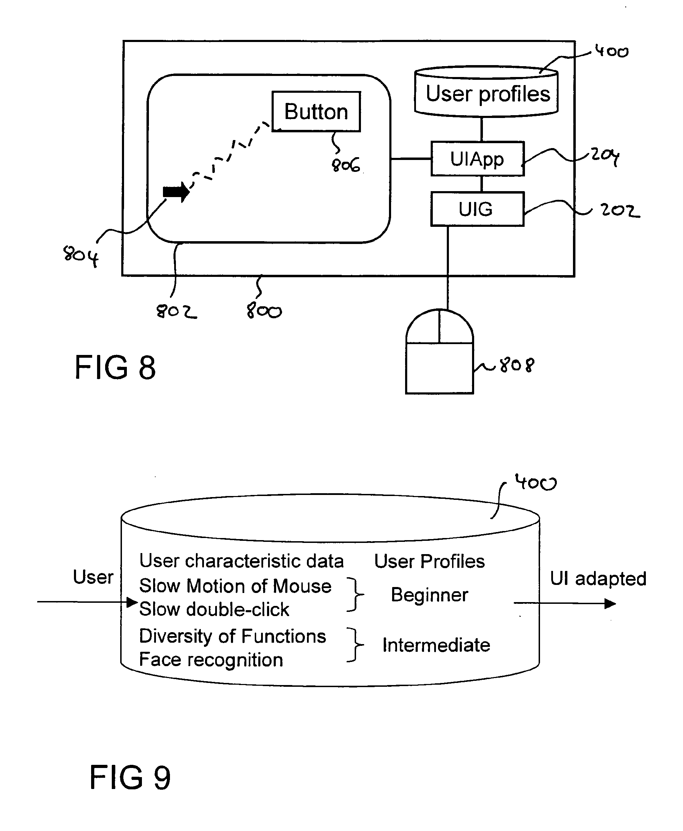

In Fig. 8 a device 800 with the user interface 802 is depicted, on which the movement of a pointer 804 to a control element 806, i.e. a button may be controlled by detecting the movement of a mouse 808. Within the user interface generator 202 an adapted user interface is approved by the user interface approval unit 204 and compared within the data base 400 with user interfaces that have been recommended by users with similar mouse movement characteristics, e. g. the user profile "beginner". After detecting that the actual user is a beginner the size of the button 806 might be increased in order to give an easier possibility for the user to press the button 806.

In Fig. 9 an example of the data base 400 is depicted, in which user characteristic data is stored together with user profiles in order to arrive at an adapted user interface.

In the following scenarios the method and system described above might be used:

In a first scenario an adaptive Hifi/TV remote control is described for a profile detection for simplicity.

Anna Schmidt is 5 years old. She lives with her parents, her 4 brothers and her sister Claudia. Sometimes she wants to turn on the television to watch cartoons, like her sister.

Environment: The house is equipped with numerous TV/Hifi systems.
Problem scenario: Anna is somebody who has no good experience with Hifi/TV systems, she is afraid of turning on any electronic device because of their complexity and because she cannot recognize the suitable remote control among all the ones present in the living room. Most of the time she asks one of her brothers to switch on the television.

Design activity scenario: Anna is coming from school; it's 5 o'clock in the afternoon. She would like to watch one cartoon and chooses the biggest room with the wider flat screen. In this room other devices such as Hifi system, DVD recorder and satellite decoder are present. All the devices have a dedicated remote control. The first issue is to recognize the remote control corresponding to the television: The television is equipped with audio/video sensors that allow detecting the profile type of the user present in front of it. The sensors deliver statistical information to an external and/or internal device that can analyze and estimate the user profile. In the current example, Anna was recognized as a child, more precisely a child that is used to watch cartoon channels, like her sister Claudia: The child profile is generated by collaborative filtering between children of the same family. The system adapts then the remote control that corresponds to the most used device from the recognized user, namely the television. The adaptation consists on making more viewable the suitable remote control by any kind of manner such as lighting or colour changing of the remote control, let's say in rose, living all the other remote controls from other devices as they are. Then thanks to the user's profile recognition and/or collaborative filtering between children of the family, it is known that Anna watches regularly the "Kika" cartoon channel. The remote control is then further tuned so that only one choice appears on it: one button corresponding to "child channel switch on".

The user interface is accordingly adapted by:
- Easy to find the remote control
- Profile estimation and recognition (face, voice recognition)
- Collaborative filtering
- Sharing of user's settings (collaborative filtering)
- Adaptation of the remote control
- Limitation of the functionality of the concerned remote control

In a second scenario the hifi/TV remote control might be adapted to physical capabilities problems of an active user.

Romeo Schmidt is Anna's grandfather. He is 78 years old and he cannot read properly without his glasses. Romeo spends most of his time in the garage or in the garden. At 1 o'clock pm, he regularly switches on the radio to listen to world's news.

Problem scenario: Romeo forgets regularly his glasses in the garage or in the garden so that he encounters some trouble sometimes when using the Hifi remote control (buttons are too small).

Design activity scenario: Romeo is going to the living room as usual at 1 o'clock pm. He takes the Hifi remote control so as to turn on the radio. The Hifi system is able due to external device (camera, microphone...) to estimate and recognize the profile of the user: in this case Romeo's profile is tagged as "old Man". Hence the remote control is modified and the main buttons corresponding to the main functionalities such as "volume" and "FM Channel" are widened so that he can locate properly and easily the buttons.

The user interface is accordingly adapted by:
- Interface adaptation to the user's capabilities to read
- Profile estimation (face, voice recognition)
- Sharing of user's settings (collaborative filtering)
- Limitation of the functionality of the concerned remote control

In a third scenario a the user interface is adapted with a method for simple menu activation and used for stress detection.

Georges is a French student currently achieving his master thesis in "strategic alignment". Georges would like to upload some videos on his web blog.

Problem scenario: Georges could records some videos with his camcorder. He would like to select the best moments so as to limit the size of the video to upload on his blog. He is currently using a new software that proposes several functionalities for video processing (quality enhancement, object insertion...). He would like just to use a "cut" function but has difficulties to find it in the tool menu.

Design activity scenario: Georges is using a new complex software and has no experience with any kind of such Tool for video processing. Georges is already surprised because the tool is loading his video very slowly and the frame search is taking too much time getting him quite disappointed. He already tried several functions that were not appropriate, so Georges spent more than an hour trying to get things running properly. The computer is equipped with a camera and a microphone that helps to detect the user's current state. Statistics gathered from the camera, the microphone and the mouse track could point out that the user is getting stressed (the user is moving more and not as usual, some sharp moves and not useful repeated clicks were detected from the mouse and the microphone could detect some yelling). A parallel software working as a background task can estimate the user's condition (stress in this case) according to the clues gathered from the webcam, the microphone and the mouse. It proposes consequently an alternative menu for the user. This alternative menu can be selected automatically or according to some short questionnaire proposed to the user (what is the main task, how much functionality does the user need...).

In this case a much simpler interface is set and tuned for the video cut and merge processing only.

The user interface is accordingly adapted by:
- Detect automatically the user's current condition
- Keep history of estimated profiles to advance the user needs at the next start (face, voice recognition, collaborative filtering).
- Propose modification and adaptation to the currently used Tool.
- Limit the functionality of the Tool

In a fourth scenario a configuration is adapted, e.g. the speed of a keyboard or a mouse or another control element

Anna is 5 years old. She doesn't know about computer but she enjoys sometimes to paint the computer.

Environment: The computer is located in Anna's brother room.

Problem scenario: Anna has always problem to handle the mouse and to type words on the keyboard. Because of the mouse and keyboard sensitivity

Design activity scenario: Anna would like to start learning computer. She would like first to use a drawing application to do some nice pictures of her family. She knows already how to do it but she is still not used to the mouse, particularly with the mouse configuration that was set up by her brother who has more experience with computers. The computer is equipped with a software running as a background task that can detect the trouble into which Anna is. The main clues were statistics collected from the mouse tracking (hesitate, sharp moves...) and from the very slow double-click needed to start the application. Hence the background application makes recommendation to the system and according to current settings, the mouse configuration is adapted or not. In this case the recommendations are accepted and the speed of the mouse and the keyboard are slowed down.

The user interface is accordingly adapted by:
- Detect automatically the user's level
- Propose an adaptation of the interface

## Claims

1. Method for adapting a user interface of a device, comprising:
detecting user characteristic data of an active user, wherein said user characteristic data is descriptive of a capability of said active user to handle said user interface;
determining an adapted user interface based on said user characteristic data; and
approving said adapted user interface based on user feedback of at least one user with similar user characteristic data.

2. Method according to any of claims 1, wherein said user feedback is given by said active user.

3. Method according to any of claims 1 to 2, further comprising:
assigning said active user to a user group based on said user characteristic data, wherein said user group comprises users with said similar user characteristic data;
selecting said adapted user interface based on an approved user interface, which has been approved by at least one member of said user group.

4. Method according to any of claims 1 to 3, wherein said user characteristic data comprise information related to an environment of said active user, an emotional state of said active user, images of said active user and/or audio signals of said active user,

5. Method according to any of claims 1 to 4, wherein said user characteristic data comprises user identification data.

6. Method according to claim 5, further comprising:
storing an adapted user interface for said active user with said user identification;
using said adapted user interface in case said user identification data is detected again.

7. Method according to any of claims 1 to 6, wherein said user characteristic data comprises statistical data, which are derived while said active user handles said user interface before adaptation.

8. Method according to any of claims 1 to 7, further comprising:
adapting a size of control elements of said user interface, a number of control elements of said user interface, a functionality of said user interface and/or a design of said user interface.

9. System for adapting a user interface of a device, comprising:
at least one sensor configured to detect user characteristic data, which user characteristic data is descriptive of a capability of said active to handle said user interface;
a user interface generator, configured to adapt said user interface to said user characteristic data;
a user interface approval unit, configured to approve said adapted user interface by user feedback of at least one user with similar user characteristic data.

10. System according to claim 9, further comprising:
an input mechanism, configured to input user feedback of said active user to said adapted user interface.

11. System according to any of claims 9 to 10, wherein said user interface approval unit is configured to assign said active user to a user group based on said user characteristic data and is further configured to adapt said user interface based on recommendations of members of said user group.

12. System according to any of claims 9 or 10, further comprising:
a database configured to store a plurality of user interfaces together with at least one user group with members, who recommended said user interfaces; wherein said user interface approval unit is configured to assign said active user to at least one of said at least one user group based on said user characteristic.

13. System according to any of claims 9 to 12, further comprising:
at least one user interface agent configured to collect user characteristic data and to propose modifications of said user interface to said user interface generator.

14. System according to claim 13, further comprising:
a plurality of user interface agents, each user interface agent of said plurality being configured to collect different user characteristics or to propose different modifications or to derive said modifications differently than any other user interface agent of said plurality of user interface agents.

15. System according to claim 14, further comprising:
a user interface agent layer being arranged between said user interface and said active user, wherein said plurality of user interface agents is organized in said user interface agent layer.

16. System according to any of claims 14 to 15, wherein said user interface agents are configured to communicate with other user interface agents.

17. System according to any of claims 14 to 16, wherein said plurality of user interface agents comprise a collaborative agent configured to evaluate recommendations of a user group in order to derive proposals for said modifications.

18. System according to any of claims 14 to 17, wherein said plurality of user interface agents comprise a feedback agent configured to evaluate feedback of said active user, an audio agent configured to evaluate audio data from said active user, a video agent configured to evaluate video data from said active user and/or a biological agent configured to evaluate biological data from said active user.

19. System according to any of claims 14 to 18, wherein said plurality of user interface agents comprise a statistical agent, configured to evaluate statistical data derived from a handling of said user interface by said active user.
